# FASCICULE DE BREVET EUROPEEN

(11) **EP 3 978 730 B1**
(45) Date de publication et mention de la délivrance du brevet: **20.09.2023**
(21) Numéro de dépôt: 21198902.5
(22) Date de dépôt: 24.09.2021
(51) Int. Cl.: F01D 25/24, F02K 3/06, B64D 29/08, F02K 1/72

(54) **TURBORÉACTEUR DOUBLE FLUX D'UN AÉRONEF COMPORTANT UN CAPOT ARTICULÉ EN ROTATION ET UN SYSTÈME DE DÉPLOIEMENT DUDIT CAPOT**
ZWEISTROM-TURBOLUFTSTRAHLTRIEBWERK EINES LUFTFAHRZEUGS MIT SICH DREHENDER GELENKABDECKUNG UND ENTFALTUNGSSYSTEM FÜR DIESE ABDECKUNG
DUAL-FLOW TURBOJET ENGINE OF AN AIRCRAFT COMPRISING A ROTATING HINGED COVER AND A SYSTEM FOR DEPLOYING SAID COVER

(30) Priorité: 02.10.2020 FR 2010094
(43) Date de publication de la demande: 06.04.2022
(73) Titulaire: AIRBUS OPERATIONS, 31060 Toulouse Cedex 9 (FR)
(72) Inventeur: VILHES, Corentin, 31300 TOULOUSE (FR); VANDERBAUWEDE, Simon, 31060 TOULOUSE (FR); GACHES, Thierry, 31060 TOULOUSE (FR); CAZEAUX, Laurent, 31060 TOULOUSE (FR); GARDES, Pascal, 31060 TOUOUSE (FR); SEGUIN, Guillaume, 31670 LABEGE Cedex (FR)
(74) Mandataire: Cabinet Le Guen Maillet

(56) Documents cités:
- WO-A1-2017/098122
- US-A1- 2016 031 563

## Description

### DOMAINE TECHNIQUE

La présente invention concerne un turboréacteur double flux d'un aéronef qui comporte un capot articulé en rotation et un système de déploiement dudit capot, ainsi qu'un aéronef comportant au moins un tel turboréacteur double flux.

### ÉTAT DE LA TECHNIQUE ANTÉRIEURE

Un aéronef comporte classiquement au moins un turboréacteur double flux qui comporte un moteur formant un noyau autour duquel est agencée une nacelle qui comporte une structure fixe qui comporte un carter de soufflante qui entoure une soufflante disposée à l'avant du moteur et un capot avant qui est autour du carter de soufflante et forme une surface aérodynamique extérieure.

La nacelle comporte également un capot arrière qui prolonge le capot avant vers l'arrière et qui généralement porte un système d'inversion de poussée.

Pour assurer la maintenance du turboréacteur double flux, il est nécessaire d'ouvrir le capot arrière afin d'accéder à l'intérieur de la nacelle. Pour ce faire, le capot arrière est monté articulé sur la structure fixe et des vérins sont installés entre le capot arrière et la structure fixe pour aider à l'ouverture dudit capot arrière.

Bien qu'un tel système donne entière satisfaction, il est nécessaire de trouver un système qui soit plus compact, moins encombrant et dont l'impact masse - performance moteur soit limité.

Le document US-A-2016/031563 montre un turboréacteur de l'état de la technique.

### EXPOSÉ DE L'INVENTION

Un objet de la présente invention est de proposer un système de propulsion d'un aéronef qui comporte un capot articulé sur une structure fixe et qui peut être déplacé en rotation par un système de déploiement motorisé.

À cet effet, est proposé un turboréacteur double flux pour un aéronef, ledit turboréacteur double flux présentant un axe longitudinal et comportant une structure fixe, une soufflante, un carter de soufflante de forme cylindrique entourant la soufflante, au moins un capot extérieur disposé autour du carter de soufflante et monté articulé sur la structure fixe, et, pour chaque capot extérieur, un système de déploiement assurant le déplacement du capot extérieur d'une position de fermeture à une position d'ouverture et inversement, où chaque système de déploiement comporte :
- un rail de guidage fixé le long d'une partie de la circonférence du carter de soufflante,
- un coulisseau mobile le long du rail de guidage et comportant un patin,
- un système d'activation déplaçant le coulisseau et le patin alternativement dans un sens ou dans l'autre le long du rail de guidage, et
- un bras dont une extrémité est montée articulée sur le patin et dont l'autre extrémité est montée articulée sur le capot extérieur,
où le système d'activation comporte, pour chaque coulisseau, un moteur qui est fixe par rapport au rail de guidage et dont l'arbre moteur est équipé d'un engrenage et une crémaillère réalisée sur le coulisseau et qui engrène avec l'engrenage.

Un tel système de déploiement motorisé permet un gain de place et de masse dans le turboréacteur double flux.

Avantageusement, le rail de guidage est arqué autour de l'axe longitudinal.

Avantageusement, la section du rail de guidage prend la forme d'un U ouvert vers l'extérieur dont le fond est fixé au carter de soufflante et le coulisseau se déplace entre les parois en U du rail de guidage.

Avantageusement, des galets présentant une rainure sur leur circonférence sont répartis le long de chaque paroi du U constituant le rail de guidage et montés libre en rotation autour d'axes parallèles à l'axe longitudinal, et le coulisseau comporte des nervures avec une forme inverse à celle des rainures des galets.

Avantageusement, le turboréacteur double flux comporte deux capots extérieurs, les deux rails de guidage se prolongent l'un l'autre en partie basse du turboréacteur, chaque coulisseau prend la forme d'un arc inscrit dans un plan perpendiculaire à l'axe longitudinal et les deux plans sont à distance l'un de l'autre.

Avantageusement, chaque capot extérieur comporte un capot fixe qui est monté articulé et un capot mobile qui est à l'arrière par rapport au capot fixe et qui est monté mobile en translation sur le capot fixe entre une position avancée et une position reculée.

Avantageusement, le turboréacteur double flux comporte des cascades solidaires du capot mobile et en position avancée, les cascades sont logées entre le carter de soufflante et le capot fixe et le rail de guidage est entre le carter de soufflante et les cascades.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique en perspective d'un turboréacteur double flux selon l'invention,
Fig. 3 est une vue en coupe par un plan axial du turboréacteur de la Fig. 2,
Fig. 4 est une vue de face du turboréacteur double flux selon l'invention en position d'ouverture intermédiaire,
Fig. 5 est une vue de face du turboréacteur double flux selon l'invention en position d'ouverture complète,
Fig. 6 est une vue en perspective et éclatée d'un système de déploiement motorisé selon l'invention,
Fig. 7 est une représentation linéaire du système de déploiement de la Fig. 6, et
Fig. 8 est une vue en coupe selon la ligne VIII-VIII de la Fig. 7.

### EXPOSÉ DÉTAILLÉ DE MODES DE RÉALISATION

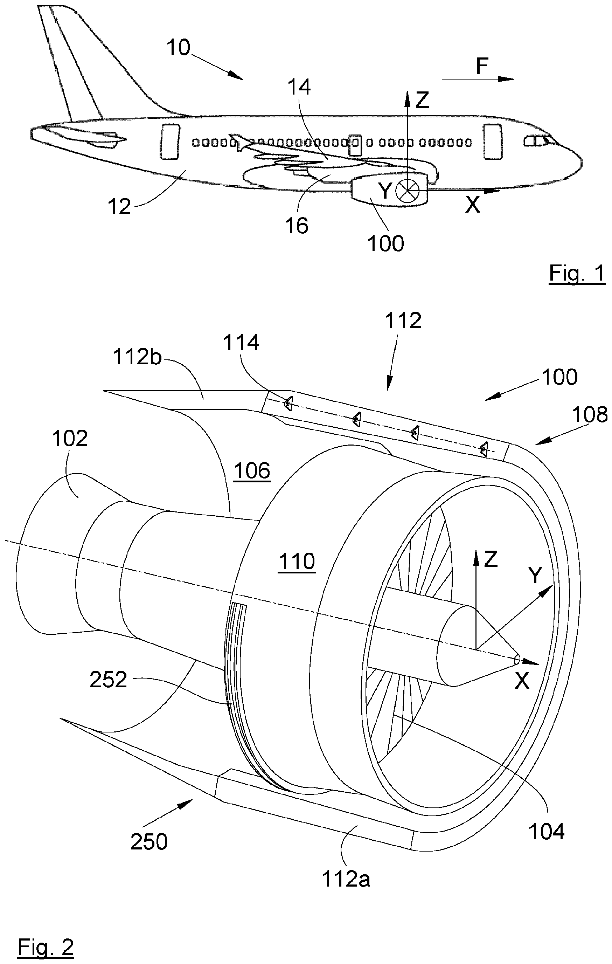

Dans la description qui suit, les termes relatifs à une position sont pris en référence au sens d'avancement d'un aéronef représenté par la flèche F de la Fig. 1.

La Fig. 1 montre un aéronef 10 qui comporte un fuselage 12 de chaque côté duquel est fixée une aile 14 qui porte au moins un mât 16 sous lequel est fixé un turboréacteur double flux 100.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois axes X, Y et Z étant orthogonaux entre eux.

La Fig. 2 montre un exemple d'un turboréacteur double flux 100 selon l'invention.

Le turboréacteur 100 comporte un moteur 102 à l'avant duquel est montée une soufflante 104 destinée à générer un flux d'air dans le turboréacteur 100 de l'avant vers l'arrière et où, de manière connue, le flux d'air se déplace ensuite en aval de la soufflante 104 en partie dans une veine primaire du turboréacteur 100 et en partie dans une veine secondaire 106 du turboréacteur 100.

Le moteur 102 forme un noyau à travers lequel circule l'air de la veine primaire.

Le turboréacteur 100 comporte également une nacelle 108 qui entoure le moteur 102 et la soufflante 104.

Le moteur 102 comporte un carter de soufflante 110 de forme cylindrique autour de la soufflante 104 et la nacelle 108 comporte au moins un capot extérieur 112 disposé autour du carter de soufflante 110. Le carter de soufflante 110 forme en partie une structure fixe du moteur 102. Classiquement, il y a deux capots extérieurs 112.

Sur la Fig. 2, seul le capot extérieur bâbord a été représenté.

Chaque capot extérieur 112 est monté articulé à une structure fixe du turboréacteur 100 par l'intermédiaire de charnières 114. La structure fixe du turboréacteur 100 peut être par exemple le mât 16.

L'axe d'articulation du capot extérieur 112 est ici l'axe des charnières 114 et est globalement parallèle à l'axe longitudinal X.

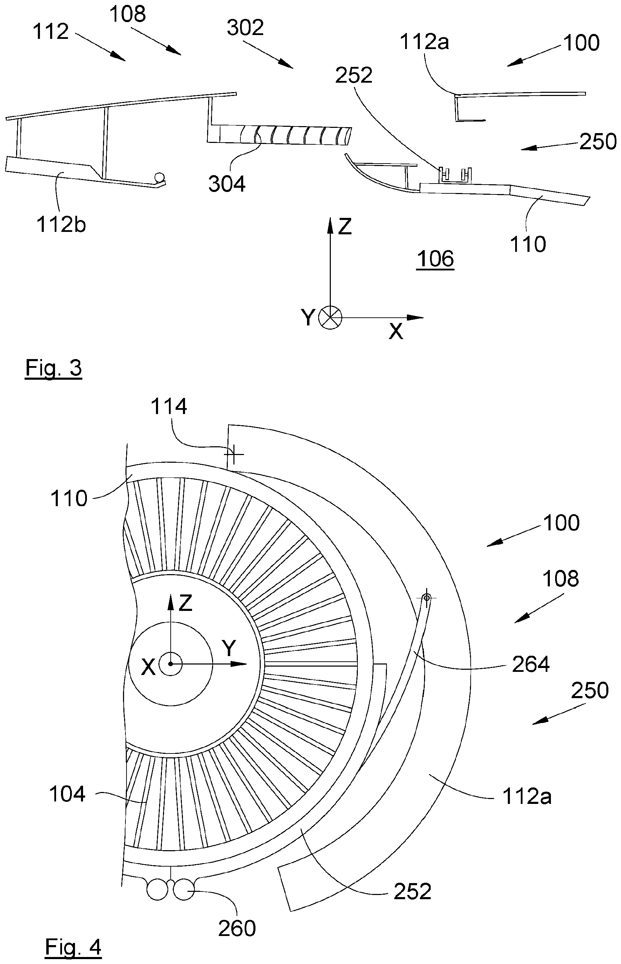

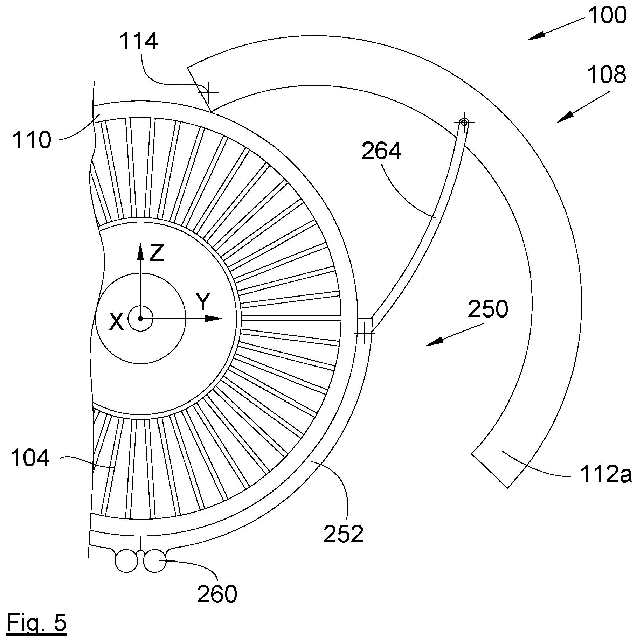

La Fig. 2 montre le turboréacteur 100 dans une position de fermeture des capots extérieurs 112 et la Fig. 5 montre le turboréacteur 100 dans une position d'ouverture complète des capots extérieurs 112. La Fig. 4 montre le turboréacteur 100 dans une position d'ouverture intermédiaire des capots extérieurs 112.

Chaque capot extérieur 112 est ainsi mobile en rotation sur la structure fixe entre la position de fermeture et la position d'ouverture et inversement. En position de fermeture, le capot extérieur 112 est rapproché du carter de soufflante 110 et en position d'ouverture, le capot extérieur 112 est écarté du carter de soufflante 110.

Dans le mode de réalisation de la Fig. 2 et de la Fig. 3, chaque capot extérieur 112 comporte un capot fixe 112a et un capot mobile 112b qui est à l'arrière par rapport au capot fixe 112a et qui est monté mobile en translation sur le capot fixe 112a.

L'articulation entre le capot extérieur 112 et la structure fixe est réalisée entre ladite structure fixe et le capot fixe 112a où sont montées les charnières 114.

Le guidage du capot mobile 112b sur le capot fixe 112a est assuré par tous moyens de guidage appropriés comme par exemple des glissières et le déplacement du capot mobile 112b est assuré par tous moyens d'entraînement appropriés comme par exemple des vérins ou des moteurs.

Le capot mobile 112b est mobile en translation parallèlement à l'axe longitudinal X entre une position avancée (Fig. 2) et une position reculée (Fig. 3).

En position avancée, le capot mobile 112b est accolé à l'arrière du capot fixe 112a et du carter de soufflante 110, afin de réaliser une continuité aérodynamique à l'extérieur avec ledit capot fixe 112a et pour délimiter extérieurement la veine secondaire 106 avec le carter de soufflante 110.

En position reculée, le capot mobile 112b est décollé et reculé par rapport au capot fixe 112a et au carter de soufflante 110 afin d'ouvrir une fenêtre 302 entre la veine secondaire 106 et l'extérieur pour permettre l'évacuation de l'air de la veine secondaire 106 vers l'extérieur. La position reculée correspond à une position d'inversion de poussée du turboréacteur 100.

Le turboréacteur 100 comporte des moyens d'inversion non représentés comme par exemple des portes d'inversion qui viennent obturer la veine secondaire 106 en arrière de la fenêtre 302 afin de guider le flux d'air de la veine secondaire 106 vers l'extérieur à travers la fenêtre 302. Les portes d'inversion peuvent prendre toutes les formes connues de l'homme du métier et elles se déploient à travers la veine secondaire 106 lorsque le capot mobile 112b recule vers la position reculée et s'escamotent hors de la veine secondaire 106 lorsque le capot mobile 112b avance vers la position avancée.

Pour assurer un meilleur guidage du flux d'air à travers la fenêtre 302, la nacelle 108 comporte également des cascades 304 qui sont solidaires du capot mobile 112b et qui se déplacent en même temps que lui pour se placer à travers la fenêtre 302 en position reculée. En position avancée, les cascades 304 sont logées entre le carter de soufflante 110 et le capot fixe 112a.

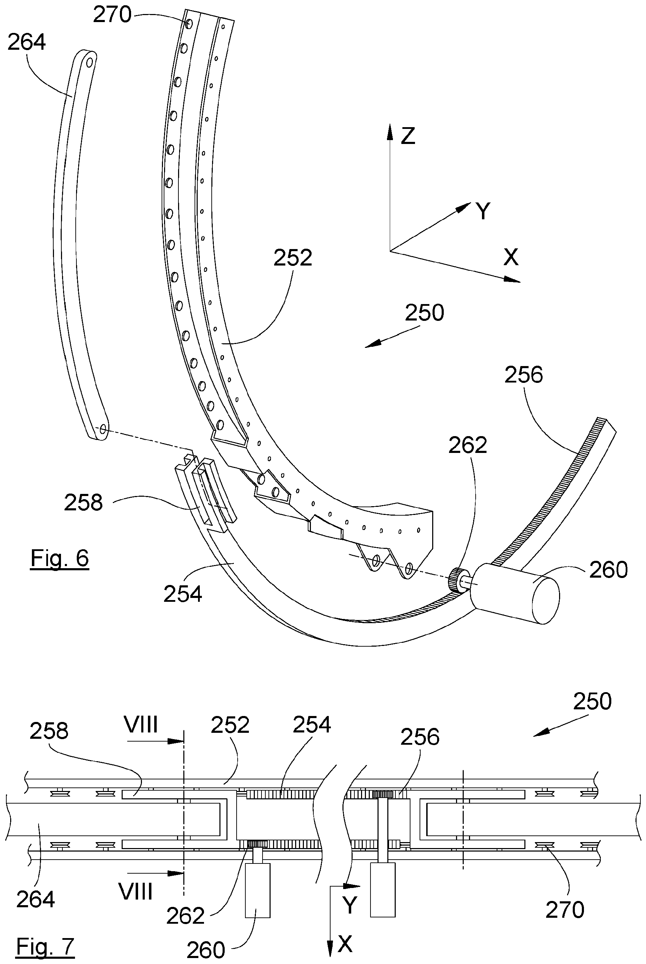

Le turboréacteur 100 comporte également pour chaque capot extérieur 112, un système de déploiement 250 qui est motorisé et qui assure le déplacement dudit capot extérieur 112 de la position de fermeture à la position d'ouverture et inversement. La Fig. 6 montre une vue éclatée du système de déploiement 250 qui comporte un rail de guidage 252 fixé le long d'une partie de la circonférence du carter de soufflante 110 et ici autour de la face extérieure du carter de soufflante 110, c'est-à-dire entre le carter de soufflante 110 et le capot extérieur 112, et plus particulièrement ici entre le carter de soufflante 110 et le capot fixe 112a. Plus particulièrement, dans le mode de réalisation de l'invention présenté ici, le rail de guidage 252 est arrangé pour être à l'intérieur des cascades 304, c'est-à-dire entre le carter de soufflante 110 et les cascades 304 en position avancée pour un gain de place.

Le rail de guidage 252 est arqué autour de l'axe longitudinal X pour suivre la courbure du carter de soufflante 110.

Il y a un rail de guidage 252 par capot extérieur 112, c'est-à-dire un à bâbord et un à tribord. Ici les deux rails de guidage 252 s'étendent à partir d'une position 6 heures à une position de globalement 3 heures.

Dans le mode de réalisation de l'invention présenté ici, la section du rail de guidage 252 prend la forme d'un U ouvert vers l'extérieur dont le fond est fixé au carter de soufflante 110. Le système de déploiement 250 comporte également un coulisseau 254 qui est monté mobile le long du rail de guidage 252. Du fait de la forme du rail de guidage 252, le déplacement du coulisseau 254 est une rotation autour de l'axe longitudinal X. Dans le mode de réalisation de l'invention présenté ici, le coulisseau 254 se déplace entre les parois en U du rail de guidage 252.

Le coulisseau 254 comporte un patin 258 de forme arquée pour s'adapter à la forme du rail de guidage 252.

Le système de déploiement 250 comporte un système d'activation qui déplace le coulisseau 254 et le patin 258 alternativement dans un sens ou dans l'autre le long du rail de guidage 252.

Le système de déploiement 250 comporte également un bras 264 dont une extrémité est montée articulée sur le patin 258 et dont l'autre extrémité est montée articulée sur le capot extérieur 112, et plus particulièrement ici sur le capot fixe 112a. Chaque articulation du bras 264 prend ici la forme d'une rotation autour d'un axe parallèle à l'axe longitudinal X.

Ainsi, dans le mode de réalisation de l'invention présenté ici, lorsque le patin 258 va monter le long du rail de guidage 252, le bras 264 va se soulever et ouvrir le capot extérieur 112 et à l'inverse, lorsque le patin 258 va descendre le long du rail de guidage 252, le bras 264 va s'abaisser et fermer le capot extérieur 112.

Un tel agencement permet un gain de place et de masse par rapport au système de l'état de la technique.

Le patin 258 prend ici la forme d'une chape dans laquelle est montée l'extrémité du bras 264. Dans le mode de réalisation de l'invention présenté sur les Figs. 4 à 7, le système d'activation comporte pour chaque coulisseau 254, un moteur 260 qui est fixe par rapport au rail de guidage 252 et dont l'arbre moteur est équipé d'un engrenage 262 et une crémaillère 256 réalisée sur le coulisseau 254 et qui engrène avec l'engrenage 262. Selon le sens de rotation du moteur et donc de l'engrenage 262, la crémaillère 256 et donc le patin 258 vont se déplacer dans un sens ou dans l'autre le long du rail de guidage 252.

La rotation de chaque moteur 260 est commandée électriquement par exemple par un interrupteur.

La crémaillère 256 prend ici une forme arquée pour s'adapter à la forme du rail de guidage 252.

Selon un autre mode de réalisation non représenté, le système d'activation peut comporter un enrouleur motorisé, pour chaque coulisseau 254, un câble dont une première extrémité est fixée au coulisseau 254 et dont une deuxième extrémité s'enroule sur l'enrouleur motorisé et, pour chaque câble, au moins une poulie de renvoi disposée à distance de l'enrouleur motorisé et par laquelle passe le câble et de manière à ce que l'enrouleur motorisé tourne dans un premier sens pour enrouler les câbles, chaque coulisseau 254 se déplace dans un premier sens le long du rail de guidage 252 et de manière à ce que l'enrouleur motorisé tourne dans un deuxième sens pour dérouler les câbles, chaque coulisseau 254 se déplace dans un deuxième sens le long du rail de guidage 252 sous l'effet du poids du capot extérieur 112 transmis par le bras 264.

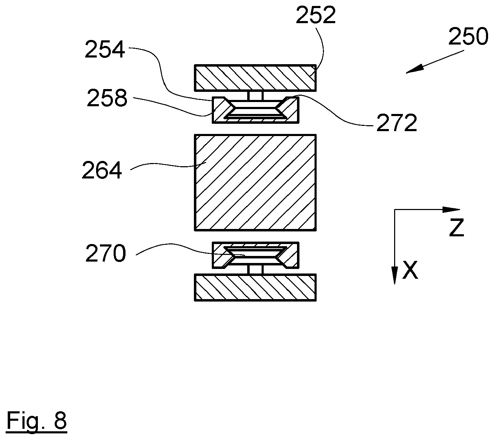

La Fig. 7 et la Fig. 8 montrent un mode de réalisation particulier du guidage du coulisseau 254 par le rail de guidage 252.

Dans ce mode de réalisation, les deux rails de guidage 252 se prolongent l'un l'autre en partie basse du turboréacteur 100, c'est-à-dire ici à 6 heures, et selon sa position, chaque coulisseau 254 sera guidé par l'un ou les deux rails de guidage 252.

Chaque coulisseau 254 prend la forme d'un arc inscrit dans un plan perpendiculaire à l'axe longitudinal X et les deux plans sont à distance l'un de l'autre.

Comme le montre la Fig. 7, les deux coulisseaux 254 sont en regard l'un de l'autre parallèlement à l'axe longitudinal X sur au moins une partie de leur parcours de déplacement. Dans le mode de réalisation particulier du système d'activation avec les crémaillères 256, chaque crémaillère 256 prend la forme d'un arc inscrit dans un plan perpendiculaire à l'axe longitudinal X et les deux plans sont à distance l'un de l'autre.

Le guidage du coulisseau 254 est assuré ici par des galets 270 et des nervures 272.

Les galets 270 sont répartis le long de chaque paroi du U constituant le rail de guidage 252 et montés libre en rotation autour d'axes parallèles à l'axe longitudinal X, c'est-à-dire qu'il y a des galets 270 disposés à l'avant du coulisseau 254 et des galets 270 disposés à l'arrière du coulisseau 254. Chaque galet 270 présente une rainure sur sa circonférence, ici une rainure en V, mais d'autres formes sont envisageables.

Les nervures 272 sont réalisées sur le coulisseau 254 et prennent une forme inverse à celle des rainures des galets 270 c'est-à-dire ici en V inversé pour coopérer avec lesdits galets 270. Chaque nervure 272 loge dans chaque rainure des galets 270 pour assurer le guidage. Chaque coulisseau 254 présente ainsi une nervure 272 orientée vers l'avant ou l'arrière selon le cas, et chaque patin 258 présente deux nervures 272, l'une orientée vers l'avant et l'autre vers l'arrière.

Bien que l'invention décrite ci-dessus s'applique plus particulièrement dans le cadre d'un turboréacteur double flux avec un capot mobile en translation et des cascades mobiles fixées audit capot mobile du fait que le système de déploiement s'intègre sur le carter de soufflante et sous les cascades, ladite invention peut également s'appliquer lorsqu'il n'y a pas un tel capot mobile en translation ou lorsque les cascades sont fixes ou même en l'absence de cascades.

## Revendications

1. Turboréacteur double flux (100) pour un aéronef (10), ledit turboréacteur double flux (100) présentant un axe longitudinal (X) et comportant une structure fixe, une soufflante (104), un carter de soufflante (110) de forme cylindrique entourant la soufflante (104), au moins un capot extérieur (112) disposé autour du carter de soufflante (110) et monté articulé sur la structure fixe, et, pour chaque capot extérieur (112), un système de déploiement (250) assurant le déplacement du capot extérieur (112) d'une position de fermeture à une position d'ouverture et inversement, où chaque système de déploiement (250) comporte :
- un rail de guidage (252) fixé le long d'une partie de la circonférence du carter de soufflante (110),
- un coulisseau (254) mobile le long du rail de guidage (252) et comportant un patin (258),
- un système d'activation déplaçant le coulisseau (254) et le patin (258) alternativement dans un sens ou dans l'autre le long du rail de guidage (252), et
- un bras (264) dont une extrémité est montée articulée sur le patin (258) et dont l'autre extrémité est montée articulée sur le capot extérieur (112),
où le système d'activation comporte pour chaque coulisseau (254), un moteur (260) qui est fixe par rapport au rail de guidage (252) et dont l'arbre moteur est équipé d'un engrenage (262) et une crémaillère (256) réalisée sur le coulisseau (254) et qui engrène avec l'engrenage (262)

2. Turboréacteur double flux selon la revendication 1, **caractérisé en ce que** le rail de guidage (252) est arqué autour de l'axe longitudinal (X).

3. Turboréacteur double flux selon la revendication 2, **caractérisé en ce que** la section du rail de guidage (252) prend la forme d'un U ouvert vers l'extérieur dont le fond est fixé au carter de soufflante (110) et **en ce que** le coulisseau (254) se déplace entre les parois en U du rail de guidage (252).

4. Turboréacteur double flux (100) selon la revendication 3, **caractérisé en ce que** des galets (270) présentant une rainure sur leur circonférence sont répartis le long de chaque paroi du U constituant le rail de guidage (252) et montés libre en rotation autour d'axes parallèles à l'axe longitudinal (X), et **en ce que** le coulisseau (254) comporte des nervures (272) avec une forme inverse à celle des rainures des galets (270).

5. Turboréacteur double flux (100) selon l'une des revendications 3 ou 4, **caractérisé en ce que** le turboréacteur double flux (100) comporte deux capots extérieurs (112), **en ce que** les deux rails de guidage (252) se prolongent l'un l'autre en partie basse du turboréacteur (100), **en ce que** chaque coulisseau (254) prend la forme d'un arc inscrit dans un plan perpendiculaire à l'axe longitudinal (X) et **en ce que** les deux plans sont à distance l'un de l'autre.

6. Turboréacteur double flux (100) selon l'une des revendications 1 à 5, **caractérisé en ce que** chaque capot extérieur (112) comporte un capot fixe (112a) qui est monté articulé et un capot mobile (112b) qui est à l'arrière par rapport au capot fixe (112a) et qui est monté mobile en translation sur le capot fixe (112a) entre une position avancée et une position reculée.

7. Turboréacteur double flux (100) selon la revendication 6, **caractérisé en ce qu'**il comporte des cascades (304) solidaires du capot mobile (112b) et **en ce qu'**en position avancée, les cascades (304) sont logées entre le carter de soufflante (110) et le capot fixe (112a) et le rail de guidage (252) est entre le carter de soufflante (110) et les cascades (304).

8. Aéronef (10) comportant au moins un turboréacteur double flux (100) selon l'une des revendications précédentes.

## Patentansprüche

1. Zweistrom-Turbinenstrahltriebwerk (100) für ein Luftfahrzeug (10), wobei das Zweistrom-Turbinenstrahltriebwerk (100) eine Längsachse (X) aufweist und eine feste Struktur, ein Gebläse (104), ein Gebläsegehäuse (110) mit zylindrischer Form, das das Gebläse (104) umgibt, mindestens eine um das Gebläsegehäuse (110) herum angeordnete und gelenkig an der festen Struktur montierte äußere Haube (112) und für jede äußere Haube (112) ein Entfaltungssystem (250), das die Verschiebung der äußeren Haube (112) aus einer Verschlussposition in eine Öffnungsposition und umgekehrt gewährleistet, umfasst, wobei jedes Entfaltungssystem (250) Folgendes umfasst:
- eine Führungsschiene (252), die entlang eines Teils des Umfangs des Gebläsegehäuses (110) befestigt ist,
- einen Schieber (254), der entlang der Führungsschiene (252) beweglich ist und einen Gleitschuh (258) aufweist,
- ein Aktivierungssystem, das den Schieber (254) und den Gleitschuh (258) abwechselnd in die eine oder die andere Richtung entlang der Führungsschiene (252) bewegt, und
- einen Arm (264), dessen eines Ende gelenkig am Gleitschuh (258) montiert ist und dessen anderes Ende gelenkig an der äußeren Haube (112) montiert ist,
wobei das Aktivierungssystem für jeden Schieber (254) einen Motor (260) umfasst, der in Bezug auf die Führungsschiene (252) feststehend ist und dessen Motorwelle mit einem Zahnrad (262) und einer Zahnstange (256) ausgestattet ist, die am Schieber (254) ausgebildet ist und mit dem Zahnrad (262) kämmt.

2. Zweistrom-Turbinenstrahltriebwerk nach Anspruch 1, **dadurch gekennzeichnet, dass** die Führungsschiene (252) um die Längsachse (X) bogenförmig ist.

3. Zweistrom-Turbinenstrahltriebwerk nach Anspruch 2, **dadurch gekennzeichnet, dass** der Querschnitt der Führungsschiene (252) die Form eines nach außen offenen U aufweist, dessen Boden am Gebläsegehäuse (110) befestigt ist, und dass sich der Schieber (254) zwischen den U-förmigen Wänden der Führungsschiene (252) bewegt.

4. Zweistrom-Turbinenstrahltriebwerk (100) nach Anspruch 3, **dadurch gekennzeichnet, dass** Rollen (270) mit einer Nut an ihrem Umfang entlang jeder Wand des U, das die Führungsschiene (252) bildet, verteilt sind und um zur Längsachse (X) parallele Achsen frei drehbar sind und dass der Schieber (254) Rippen (272) umfasst, deren Form umgekehrt zu der der Nuten der Rollen (270) ist.

5. Zweistrom-Turbinenstrahltriebwerk (100) nach einem der Ansprüche 3 oder 4, **dadurch gekennzeichnet, dass** das Zweistrom-Turbinenstrahltriebwerk (100) zwei äußere Hauben (112) umfasst, dass sich die beiden Führungsschienen (252) im unteren Teil des Turbinenstrahltriebwerks (100) gegenseitig verlängern, dass jeder Schieber (254) die Form eines Bogens aufweist, der in einer zur Längsachse (X) senkrechten Ebene verläuft, und dass die beiden Ebenen voneinander beabstandet sind.

6. Zweistrom-Turbinenstrahltriebwerk (100) nach einem der Ansprüche 1 bis 5, **dadurch gekennzeichnet, dass** jede äußere Haube (112) eine gelenkig montierte feste Haube (112a) und eine bewegliche Haube (112b), die sich in Bezug auf die feste Haube (112a) hinten befindet und zwischen einer vorgeschobenen Position und einer zurückgezogenen Position verschiebbar an der festen Haube (112a) montiert ist, aufweist.

7. Zweistrom-Turbinenstrahltriebwerk (100) nach Anspruch 6, **dadurch gekennzeichnet, dass** es Kaskaden (304) aufweist, die fest mit der beweglichen Haube (112b) verbunden sind, und dass in der vorgeschobenen Position die Kaskaden (304) zwischen dem Gebläsegehäuse (110) und der festen Haube (112a) angeordnet sind und die Führungsschiene (252) sich zwischen dem Gebläsegehäuse (110) und den Kaskaden (304) befindet.

8. Luftfahrzeug (10), umfassend mindestens ein Zweistrom-Turbinenstrahltriebwerk (100) nach einem der vorangehenden Ansprüche.

## Claims

1. Turbofan (100) for an aircraft (10), said turbofan (100) having a longitudinal axis (X) and having a fixed structure, a fan (104), a cylindrical fan casing (110) surrounding the fan (104), at least one outer cowl (112) disposed around the fan casing (110) and mounted so as to be articulated on the fixed structure, and, for each outer cowl (112), a deployment system (250) that moves the outer cowl (112) from a closed position to an open position and vice versa, wherein each deployment system (250) has:
- a guide rail (252) fastened along a part of the circumference of the fan casing (110),
- a slider (254) that is able to move along the guide rail (252) and has a shoe (258),
- an activation system that moves the slider (254) and the shoe (258) alternately in one direction or the other along the guide rail (252), and
- an arm (264) of which one end is mounted so as to be articulated on the shoe (258) and of which the other end is mounted so as to be articulated on the outer cowl (112),
wherein the activation system has, for each slider (254), a motor (260) that is fixed relative to the guide rail (252) and of which the drive shaft is equipped with a gear (262) and a rack (256) that is realized on the slider (254) and meshes with the gear (262).

2. Turbofan according to Claim 1, **characterized in that** the guide rail (252) is curved about the longitudinal axis (X).

3. Turbofan according to Claim 2, **characterized in that** the section of the guide rail (252) takes the form of a U that is open towards the outside, of which the bottom is fastened to the fan casing (110), and **in that** the slider (254) moves between the U-walls of the guide rail (252).

4. Turbofan (100) according to Claim 3, **characterized in that** rollers (270) having a groove on their circumference are distributed along each wall of the U constituting the guide rail (252) and are mounted so as to be free to rotate about axes parallel to the longitudinal axis (X), and **in that** the slider (254) has ribs (272) with a shape that is the inverse of that of the grooves of the rollers (270).

5. Turbofan (100) according to either of Claims 3 and 4, **characterized in that** the turbofan (100) has two outer cowls (112), **in that** the two guide rails (252) are extensions of one another in the bottom part of the turbofan (100), **in that** each slider (254) takes the form of an arc inscribed in a plane perpendicular to the longitudinal axis (X) and **in that** the two planes are at a distance from one another.

6. Turbofan (100) according to one of Claims 1 to 5, **characterized in that** each outer cowl (112) has a fixed cowl (112a) that is mounted in an articulated manner and a mobile cowl (112b) that is behind the fixed cowl (112a) and is mounted so as to be able to move in translation on the fixed cowl (112a) between an advanced position and a retracted position.

7. Turbofan (100) according to Claim 6, **characterized in that** it has cascades (304) secured to the mobile cowl (112b) and **in that**, in the advanced position, the cascades (304) are housed between the fan casing (110) and the fixed cowl (112a) and the guide rail (252) is between the fan casing (110) and the cascades (304).

8. Aircraft (10) having at least one turbofan (100) according to one of the preceding claims.
